# EUROPEAN PATENT APPLICATION

(11) **EP 3 951 442 A1**
(43) Date of publication of application: **09.02.2022**
(21) Application number: 20783046.4
(22) Date of filing: 27.03.2020
(51) Int. Cl.: G02B 1/04, C08G 18/38, G02C 7/00, G02C 7/02

(54) **POLYMERIZABLE COMPOSITION FOR OPTICAL MEMBER, OPTICAL MEMBER, AND METHOD FOR PRODUCING OPTICAL MEMBER**

(30) Priority: 29.03.2019 JP 2019066068
(71) Applicant: Hoya Lens Thailand Ltd., Pathumthani 12130 (TH)
(72) Inventor: IGARI Masahito, Tokyo 160-8347 (JP); YAMASHITA Teruo, Tokyo 160-8347 (JP); WATANABE Tsuyoshi, Tokyo 160-8347 (JP)
(74) Representative: Gerauer, Marc Philippé
(86) International application number: PCT/JP2020/014266
(87) International publication number: WO 2020/203867

(57) **Abstract**

Provided is a polymerizable composition for an optical component, containing a polyiso(thio)cyanate compound and a polythiol compound, wherein the polythiol compound contains a trifunctional aliphatic polythiol compound and a tetrafunctional aliphatic polythiol compound.

## Description

### Technical Field

The present invention relates to a polymerizable composition for an optical component, an optical component, and a method for producing the optical component.

### Background Art

A cured product obtained by curing a polymerizable composition containing a polyiso(thio)cyanate compound and a polythiol compound is widely used as various optical components such as lenses (refer to Patent Literature 1, for example).

### Citation List

### Patent Literature

Patent Literature 1: JP 7-252207 A

### Summary of Invention

### Technical Problem

One of the physical properties desired for the optical component is to have excellent heat resistance. This is due to the following reason, for example. The optical component is used, for example, as a substrate for various optical products. The optical products are usually produced by forming one or more functional films (for example, a hard coat, an antireflective film, and the like) on the optical component (substrate). The functional film is formed by various film forming methods, and many film forming methods involve a heat treatment. If an optical component which is a substrate has poor heat resistance, the quality of an optical product may be deteriorated due to deformation and/or deterioration of the substrate by the heat treatment. For example, when the substrate is deformed, a functional film formed on the substrate cannot conform to the deformation of the substrate, and cracks may be generated in the functional film. Meanwhile, if the substrate is to be subjected to a heated treatment at a heating temperature at which the substrate can withstand in order to prevent such deterioration in quality, film forming conditions are restricted, and usable film forming materials are also limited.

According to an aspect of the present invention, there is provided a polymerizable composition for an optical component that contains a polyiso(thio)cyanate compound and a polythiol compound and can be used for producing an optical component excellent in heat resistance.

### Solution to Problem

An aspect of the present invention relates to a polymerizable composition for an optical component (hereinafter, simply referred to as "polymerizable composition") containing a polyiso(thio)cyanate compound and a polythiol compound, wherein the polythiol compound contains a trifunctional aliphatic polythiol compound and a tetrafunctional aliphatic polythiol compound.

The polymerizable composition contains, as a polythiol compound, a trifunctional aliphatic polythiol compound and a tetrafunctional aliphatic polythiol compound. An optical component formed of such a composition can have excellent heat resistance as compared with conventional optical components having the same refractive index.

### Advantageous Effects of Invention

According to an aspect of the present invention, there is provided an optical component obtained by curing a polymerizable composition containing a polyiso(thio)cyanate compound and a polythiol compound, which has excellent heat resistance.

### Description of Embodiments

### [Polymerizable composition for optical component]

The polymerizable composition contains a polyiso(thio)cyanate compound and a polythiol compound. These compounds will be further described in detail below.

In the present invention and the present specification, the "polyiso(thio)cyanate compound" refers to a compound having two or more iso(thio)cyanate groups per molecule. The "iso(thio)cyanate" means isocyanate and/or isothiocyanate. The isocyanate is sometimes referred to as isocyanate, and isothiocyanate is sometimes referred to as isothiocyanate. The "polythiol compound" refers to a compound having two or more thiol groups per molecule. In addition, some compounds that can be used as components of the polymerizable composition have two or more isomers. For such compounds, a mixture of two or more isomers may be used, or one of two or more isomers may be used alone.

### <Polyiso(thio)cyanate compound>

The polyiso(thio)cyanate compound can be, for example, an aliphatic compound, an alicyclic compound, an aromatic compound, a heterocyclic compound, or the like. The number of iso(thio)cyanate groups contained in the polyiso(thio)cyanate compound is two or more, preferably two to four, and more preferably two or three per molecule.

Specific examples of the polyiso(thio)cyanate compound include aliphatic polyisocyanate compounds such as hexamethylene diisocyanate, 1,5-pentane diisocyanate, isophorone diisocyanate, bis(isocyanatomethyl) cyclohexane, dicyclohexylmethane diisocyanate, 2,5-bis(isocyanatomethyl)-bicyclo [2.2.1]heptane, 2,6-bis(isocyanatomethyl)-bicyclo [2.2.1]heptane, bis(4-isocyanatocyclohexyl) methane, 1,3-bis(isocyanatomethyl) cyclohexane, or 1,4-bis(isocyanatomethyl) cyclohexane; and aromatic polyisocyanate compounds such as xylylene diisocyanate, 1,3-diisocyanatobenzene, tolylene diisocyanate, or diphenylmethane diisocyanate. Furthermore, a halogen substitution product of the polyiso(thio)cyanate compound such as a chlorine substitution product thereof or a bromine substitution product thereof, an alkyl substitution product thereof, an alkoxy substitution product thereof, a prepolymer type modified product thereof with a nitro substitution product or a polyhydric alcohol, a carbodiimide modified product thereof, a urea modified product thereof, a biuret modified product thereof, a dimerization or trimerization reaction product thereof, and the like can be used. As the polyiso(thio)cyanate compound, only one polyiso(thio)cyanate compound may be used, or two or more polyiso(thio)cyanate compounds may be mixed to be used. In an aspect, the polymerizable composition can contain a cyclic structure-containing compound as a polyiso(thio)cyanate compound. The cyclic structure-containing compound may be a carbocyclic compound, a heterocyclic compound, a monocyclic compound, or a bicyclic or higher polycyclic compound. Moreover, the polyiso(thio)cyanate compound may include a plurality of cyclic structures. In an aspect, the polyiso(thio)cyanate compound can be an aromatic compound (aromatic polyiso(thio)cyanate compound).

The content of the polyiso(thio)cyanate compound in the polymerizable composition can be, for example, more than 0 mass% and 60.00 mass% or less, and preferably in a range of 40.00 to 60.00 mass% with respect to the mass (100 mass%) of the polymerizable composition. In the present invention and the present specification, the mass of the polymerizable composition means the mass excluding the solvent when the polymerizable composition contains the solvent.

### <Polythiol compound>

The polymerizable composition contains, as a polythiol compound, a trifunctional aliphatic polythiol compound and a tetrafunctional aliphatic polythiol compound. The polymerizable composition can contain one or two or more trifunctional aliphatic polythiol compounds, and can contain one or two or more tetrafunctional aliphatic polythiol compounds. In the present invention and the present specification, the aliphatic compound also includes a compound containing a hetero atom and a compound containing an ester bond. Examples of the hetero atom include a sulfur atom and an oxygen atom. Preferably, one of the two aliphatic polythiol compounds contains an ester bond and the other does not contain an ester bond. More preferably, the tetrafunctional aliphatic polythiol compound contains an ester bond and the trifunctional aliphatic polythiol compound does not contain an ester bond.

The trifunctional aliphatic polythiol compound is an aliphatic compound having three thiol groups contained in one molecule. The trifunctional aliphatic polythiol compound preferably contains one or more sulfide bonds (-S-) in one molecule, and more preferably contains one to three sulfide bonds (-S-) in one molecule from the viewpoint of improving the refractive index of the optical component. Specific examples thereof include 4-mercaptomethyl-1,8-dimercapto-3,6-dithiaoctane (described below).

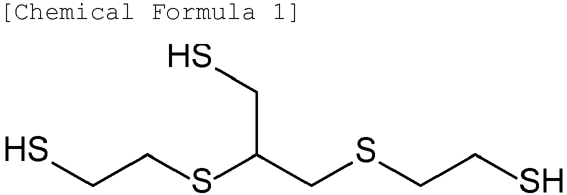

The tetrafunctional aliphatic polythiol compound is an aliphatic compound having four thiol groups contained in one molecule. The tetrafunctional aliphatic polythiol compound preferably contains one or more ester groups in one molecule, more preferably one to four ester groups, still more preferably two to four ester groups, and still even more preferably three or four ester groups from the viewpoint of further improving the heat resistance of the optical component. The tetrafunctional aliphatic polythiol compound may not contain a sulfide bond or may contain one or more sulfide bonds in one molecule. In an aspect, the tetrafunctional aliphatic polythiol compound preferably does not contain a sulfide bond. Specific examples of the tetrafunctional aliphatic polythiol compound include pentaerythritol tetrakis(2-mercaptoacetate) (described below).

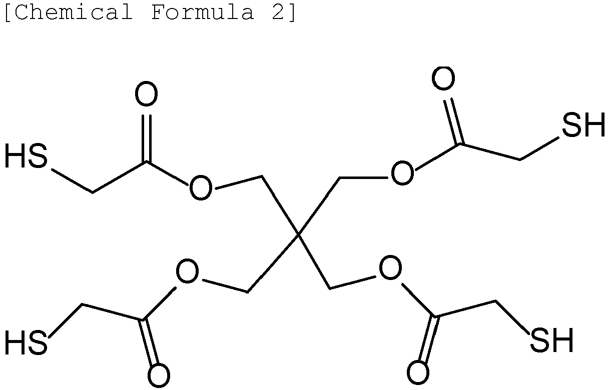

The content of the polythiol compound in the polymerizable composition can be, for example, 20.00 to 80.00 mass%, and preferably 30.00 to 70.00 mass%, with respect to the mass (100 mass%) of the polymerizable composition. The content of the trifunctional aliphatic polythiol compound is preferably 20.00 to 80.00 mass%, and more preferably 40.00 to 70.00 mass% when the total amount of the polythiol compound is 100 mass%. Meanwhile, the content of the tetrafunctional aliphatic polythiol compound is preferably 20.00 to 80.00 mass%, and more preferably 30.00 to 60.00 mass% when the total amount of the polythiol compound is 100 mass%.

### <Other components>

The polymerizable composition can optionally contain, in addition to the polyiso(thio)cyanate compound and the polythiol compound, one or more known components such as an additive and a polymerization catalyst which are generally used for producing an optical component as necessary. Examples of the additive include various additives such as an ultraviolet absorber, an antioxidant, and a release agent. Further, an organic phosphorus compound such as a phosphine derivative can also be used as an additive. The amount of the additive used can be set appropriately.

Further, the polymerizable composition preferably contains, as a polymerization catalyst, a polymerization catalyst that catalyzes a thiourethanization reaction between a polyiso(thio)cyanate compound and a polythiol compound. Examples of the polymerization catalyst that catalyzes a thiourethanization reaction include known polymerization catalysts of organotin compounds such as dibutyltin diacetate, dibutyltin dilaurate, dibutyltin dichloride, dimethyltin dichloride, monomethyltin trichloride, trimethyltin chloride, tributyltin chloride, tributyltin fluoride, and dimethyltin dibromide. The polymerizable composition can contain, for example, the polymerization catalyst that catalyzes a thiourethanization reaction in an amount of 0.005 to 0.50 mass% with respect to the mass (100 mass%) of the polymerizable composition.

The polymerizable composition can be prepared by simultaneously or sequentially mixing the various components described above at the same time or in any order. The preparation method is not particularly limited, and any known method for preparing a polymerizable composition can be adopted. Further, the polymerizable composition may be prepared without adding a solvent, or may be prepared by adding an optional amount of the solvent. As the solvent, it is possible to use one or more known solvents that can be used in the polymerizable composition.

### <Method for producing optical component>

The polyiso(thio)cyanate compound and the polythiol compound described above are all polymerizable compounds, and by polymerizing these compounds, the polymerizable composition can be cured to obtain a cured product (polythiourethane resin). The polythiourethane resin is a resin having a plurality of bonds represented by the following Formula 1 in the molecule thereof: 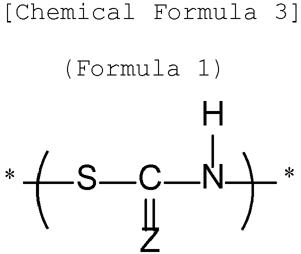 where Z represents an oxygen atom or a sulfur atom. A reaction between the thiol group and the isocyanate group forms the bond in which Z is an oxygen atom. A reaction between the thiol group and the isothiocyanate group forms the bond in which Z is a sulfur atom. The "thiourethane bond" in the present invention and the present specification means a bond represented by the above Formula 1. In Formula 1, * indicates the position where the thiourethane bond is bonded to another adjacent structure. The polythiourethane resin obtained by polymerizing the polymerizable compound contained in the polymerizable composition can be used as various optical components. For example, examples of the optical component include various lenses such as a spectacle lens, a telescope lens, a binocular lens, a microscope lens, an endoscope lens, and an imaging system lens of various cameras. The "lens" in the present invention and the present specification includes a "lens substrate" in which one or more layers are optionally layered.

For example, cast polymerization is preferable for producing a cured product (also referred to as "plastic lens") having a lens shape. In cast polymerization, a polymerizable composition is injected into a cavity of a molding die having two molds facing each other with a predetermined gap and a cavity formed by closing the gap, and the polymerizable compound contained in the polymerizable composition is polymerized (curing reaction) in the cavity to obtain a cured product. For details of a molding die usable for cast polymerization, for example, refer to paragraphs 0012 to 0014 and Fig. 1 of JP 2009-262480 A. Note that the publication describes a molding die in which the gap between the two molds is closed with a gasket as a sealing member, but a tape can also be used as the sealing member.

In an aspect, the cast polymerization can be performed as follows. The polymerizable composition is injected into a molding die cavity from an injection port formed on a side surface of the molding die. After injection, by polymerizing (curing reaction) the polymerizable compound contained in the polymerizable composition by heating, the polymerizable composition is cured to obtain a cured product having an internal shape of the cavity transferred thereon. The polymerization condition is not particularly limited, and can be appropriately set depending on the composition of a polymerizable composition or the like. As an example, a molding die having a polymerizable composition injected into a cavity can be heated at a heating temperature of 20 to 150°C for about 1 to 72 hours, but the polymerization condition is not limited thereto. In the present invention and the present specification, the temperature such as a heating temperature for cast polymerization refers to a temperature of an atmosphere in which a molding die is placed. Further, it is possible to raise the temperature at an optional temperature rising rate during heating, and to lower the temperature (cooling) at an optional temperature falling rate. After completion of the polymerization (curing reaction), the cured product inside the cavity is released from the molding die. The cured product can be released from the molding die by removing the upper and lower molds forming the cavity and a gasket or a tape in any order as usually performed in cast polymerization. The cured product released from the molding die can be used as an optical component after posttreatment as necessary, and can be used as, for example, various lenses (for example, lens substrate). As an example, the cured product used as a lens substrate of a spectacle lens can be usually subjected to a post-step such as annealing, a dyeing treatment, a grinding step such as a rounding step, a polishing step, or a step of forming a coat layer such as a primer coat layer for improving impact resistance or a hard coat layer for improving surface hardness after releasing. Further, various functional layers such as an antireflective layer and a water-repellent layer can be formed on the lens substrate. A known technique can be applied to any of these steps. In this way, a spectacle lens of which a lens substrate is the cured product can be obtained. Further, by mounting this spectacle lens in a frame, spectacles can be obtained.

### [Optical component and method for producing optical component]

An aspect of the present invention relates to an optical component that is a cured product obtained by curing the above polymerizable composition.

Further, an aspect of the present invention relates to a method for producing an optical component, including curing the polymerizable composition by a curing treatment.

The curing treatment can be heat treatment or light irradiation, and is preferably heat treatment. For details of the curing treatment and the polymerizable composition and the like to be subjected to the curing treatment, refer to the above description.

The optical component can have excellent heat resistance. The optical component having excellent heat resistance has, for example, little deformation and/or deterioration of the optical component as the substrate even if the heat treatment is performed in a film forming step of forming one or more various functional films on the optical component, which is preferable. Examples of an index of the heat resistance include a glass transition temperature (Tg). The glass transition temperature (Tg) in the present invention and the present specification refers to a glass transition temperature measured by a thermomechanical analysis (TMA) penetration method according to JIS K7196-2012. For a specific measurement method, refer to Examples described later. A high glass transition temperature is preferable from the viewpoint of heat resistance.

### Examples

Hereinafter, the present invention will be described in more detail with Examples, but the present invention is not limited to aspects indicated by Examples. Operation and evaluation described below were performed in air at room temperature (about 20 to 25°C) unless otherwise specified.

### [Example 1]

In a 300 ml eggplant-shaped flask, 48.2 g of tolylene diisocyanate (TDI) as a polyiso(thio)cyanate compound, 0.3 g of triphenylphosphine (TPP) as an organic phosphorus compound, 0.15 g of butoxyethyl acid phosphate as a release agent (JP-506H, manufactured by Johoku Chemical Co., Ltd), and 0.02 g of dimethyltin dichloride as a polymerization catalyst were charged, and stirring was continued for one hour under nitrogen purge at 20°C. When these components were completely dissolved, 18.5 g of pentaerythritol tetrakis(2-mercaptoacetate) (PETMA) and 33.3 g of 4-mercaptomethyl-1,8-dimercapto-3,6-dithiaoctane were added as a polythiol compound, and the mixture was stirred under reduced pressure for 20 minutes at 0.13 kPa (1.0 Torr) to prepare a polymerizable composition containing a polyiso(thio)cyanate compound and a polythiol compound.

This polymerizable composition was injected into the cavity of the molding die through a polytetrafluoroethylene membrane filter having a pore diameter of 1.0 µm, and cast polymerization was performed for 24 hours at a temperature program from an initial temperature of 25°C to a final temperature of 120°C to produce a plastic lens having a center thickness of 2 mm.

### [Example 2]

In a 300 ml eggplant-shaped flask, 56.5 g of diphenylmethane diisocyanate (MDI) as a polyiso(thio)cyanate compound, 0.3 g of triphenylphosphine (TPP) as an organic phosphorus compound, 0.15 g of butoxyethyl acid phosphate as a release agent (JP-506H, manufactured by Johoku Chemical Co., Ltd), and 0.02 g of dimethyltin dichloride as a polymerization catalyst were charged, and stirring was continued for one hour under nitrogen purge at 20°C. When these components were completely dissolved, 21.7 g of pentaerythritol tetrakis(2-mercaptoacetate) (PETMA) and 21.7 g of 4-mercaptomethyl-1,8-dimercapto-3,6-dithiaoctane were added as a polythiol compound, and the mixture was stirred under reduced pressure for 20 minutes at 0.13 kPa (1.0 Torr) to prepare a polymerizable composition containing a polyiso(thio)cyanate compound and a polythiol compound.

This polymerizable composition was injected into the cavity of the molding die through a polytetrafluoroethylene membrane filter having a pore diameter of 1.0 µm, and cast polymerization was performed for 24 hours at a temperature program from an initial temperature of 25°C to a final temperature of 120°C to produce a plastic lens having a center thickness of 2 mm.

The refractive index ne of each of the plastic lens of Example 1 and the plastic lens of Example 2 was measured with a precision refractometer KPR-2000, manufactured by Kalnew Optical Industrial Co., Ltd., and the refractive index ne was 1.67 in both Examples.

### [Evaluation of heat resistance]

The plastic lenses of Examples 1 and 2 were released from the molding die and then subjected to measurement of glass transition temperature. The glass transition temperature was measured by a penetration method using a thermal instrument analyzer TMA8310, manufactured by Rigaku Corporation. The temperature rising rate at the time of measurement was 10 K/min, and an indenter having a diameter of 0.5 mm was used as an indenter for the penetration method. As a reference sample lens, EYNOA, manufactured by HOYA Corporation, a commercially available plastic spectacle lens having a refractive index ne of 1.67, was prepared, and the glass transition temperature of the lens was measured by the above method. The measured glass transition temperatures are shown in Table 1. The results shown in Table 1 demonstrate that the plastic lenses of Examples 1 and 2 have a high glass transition temperature and excellent heat resistance as compared with commercially available plastic spectacle lenses having the same refractive index. As described above, the plastic lens having excellent heat resistance is suitable as a lens substrate for forming one or more functional films (for example, a hard coat, an antireflective film, or the like) on the plastic lens by a film forming method involving a heat treatment to produce a spectacle lens.

**[Table 1]**

| | Glass transition temperature |
|---|---|
| Example 1 | 123°C |
| Example 2 | 105°C |
| Reference sample lens | 102°C |

Finally, the above-described aspects will be summarized.

According to an aspect, there is provided a polymerizable composition for an optical component containing a polyiso(thio)cyanate compound and a polythiol compound, wherein the polythiol compound contains a trifunctional aliphatic polythiol compound and a tetrafunctional aliphatic polythiol compound.

The polymerizable composition can be used for producing an optical component having excellent heat resistance.

In an aspect, the tetrafunctional aliphatic polythiol compound can contain an ester bond.

In an aspect, the trifunctional aliphatic polythiol compound can be a compound not containing an ester bond.

In an aspect, the trifunctional aliphatic polythiol compound can contain a sulfide bond.

In an aspect, the polyiso(thio)cyanate compound can be an aromatic compound.

In an aspect, the polymerizable composition can further contain an organic phosphorus compound.

In an aspect, the optical component can be a lens.

In an aspect, the lens can be a spectacle lens.

According to an aspect, there is provided an optical component that is a cured product obtained by curing the above polymerizable composition.

According to an aspect, there is provided a method for producing an optical component, including curing the polymerizable composition by a curing treatment.

The various aspects described in this specification can be combined in two or more in any combination.

The embodiment disclosed herein is an example in every respect and should not be restrictively understood. The scope of the present invention is defined not by the above description but by claims, and intends to include all modifications within meaning and a scope equal to claims.

### Industrial Applicability

An aspect of the present invention is useful in the field of producing various optical components such as a spectacle lens.

## Claims

1. A polymerizable composition for an optical component, comprising:
a polyiso(thio)cyanate compound; and
a polythiol compound, wherein
the polythiol compound contains a trifunctional aliphatic polythiol compound and a tetrafunctional aliphatic polythiol compound.

2. The polymerizable composition for an optical component according to claim 1, wherein the tetrafunctional aliphatic polythiol compound contains an ester bond.

3. The polymerizable composition for an optical component according to claim 1 or 2, wherein the trifunctional aliphatic polythiol compound does not contain an ester bond.

4. The polymerizable composition for an optical component according to any one of claims 1 to 3, wherein the trifunctional aliphatic polythiol compound contains a sulfide bond.

5. The polymerizable composition for an optical component according to any one of claims 1 to 4, wherein the polyiso(thio)cyanate compound is an aromatic compound.

6. The polymerizable composition for an optical component according to any one of claims 1 to 5, further comprising an organic phosphorus compound.

7. The polymerizable composition for an optical component according to any one of claims 1 to 6, wherein the optical component is a lens.

8. The polymerizable composition for an optical component according to claim 7, wherein the lens is a spectacle lens.

9. An optical component which is a cured product obtained by curing the polymerizable composition for an optical component according to any one of claims 1 to 8.

10. A method for producing an optical component, comprising:
curing the polymerizable composition for an optical component according to any one of claims 1 to 8 by a curing treatment.
